Europäisches Patentamt

European Patent Office

Office européen des brevets

(11) Publication number: **0 433 916 A1**

# EUROPEAN PATENT APPLICATION

(21) Application number: 90124259.4

(22) Date of filing: 14.12.90

(51) Int. Cl.5: **H01J 61/44**, H01J 1/70, C09K 11/68, C09K 11/71

(30) Priority: 20.12.89 JP 330280/89

(43) Date of publication of application:
26.06.91 Bulletin 91/26

(84) Designated Contracting States:
**DE GB**

(71) Applicant: **TOSHIBA LIGHTING & TECHNOLOGY CORPORATION**
**4-28, Mita 1-chome**
**Minato-ku Tokyo(JP)**

(72) Inventor: **Asakura, Masahiko**
**7-10-18, Hirasaku**
**Yokosuka-shi, Kanagawa-ken(JP)**

(74) Representative: **Henkel, Feiler, Hänzel & Partner**
**Möhlstrasse 37**
**W-8000 München 80(DE)**

(54) Fluorescent lamp with non-deteriorative phosphor emitting blue color of light.

(57) A fluorescent lamp includes an envelope (2). A pair of electrodes (3) are disposed in the envelope (2) to generate a discharge therebetween. A filling (40) contains xenon that emits U.V. radiation by means of the discharge. A phosphor coating (5) on the inner surface of the envelope (2) includes at least one of phosphors of $CaWO_4$ and $Sr_2P_2O_7$:Sn to be excited by the U.V. radiation and to emit visible light.

F I G. 3

EP 0 433 916 A1

## FLUORESCENT LAMP WITH NON-DETERIORATIVE PHOSPHOR EMITTING BLUE COLOR OF LIGHT

The present invention relates to a fluorescent lamp in which xenon or a rare gas containing mainly xenon is sealed in a bulb having electrodes, and phosphor is excited by the discharge of the xenon to radiate light.

In recent years, trials have been conducted using discharge lamps sealed with xenon gas as display needles on display boards for measuring instruments, electric apparatuses, etc.

More specifically, a light emitting tube-shaped bulb is composed, for example, of an extremely thin hollow glass tube having an inner diameter of approx. 2 - 3 mm. This bulb is used as a display needle of an instrument. One end of the discharge lamp is attached to the rotational shaft of a meter. When this rotational shaft is rotated, the discharge lamp is integrally moved through an arc. Thus, the discharge lamp performs the function of the display needle. When the discharge lamp is ignited, the lamp has such advantages that the lamp itself emits a light and also illuminates the display scale so that special illumination is not required.

The xenon discharge lamp used as the display needle of an instrument as described above has an inner electrode provided at one end of a tube-shaped bulb formed with a slender discharge space, a strip-like outer electrode provided along its axial direction on the outer surface of the bulb, and a phosphor film made of phosphors emitting three primary colors of light (hereinafter referred to as three primary color phosphors) on the inner surface of the discharge space.

A cold cathode having an excellent lifetime characteristic is employed as the inner electrode, and xenon (Xe) or a mixture gas of mainly xenon and another gas such as neon, krypton, or argon, etc. is sealed in the discharge space.

Accordingly, a high frequency voltage is applied between the inner electrode and the outer electrode to generate a discharge of rare gas, containing mainly xenon, in the discharge space.

A shielding film made of synthetic resin is formed on the outer surface of the bulb and a slender light transmitting strip extending axially along the bulb is formed by removing a corresponding portion from the shielding film, and light is emitted only from the light transmitting strip. Therefore, a discharge lamp of this type is formed as an aperture type lamp. Thus, a light emitting unit as a display needle is formed in an extremely slim needle shape.

The sealed discharge lamp containing xenon radiates ultraviolet rays within a spectrum of a short wavelength, by means of the discharge between the inner and outer electrodes, the short wavelength light ray excites the phosphor, and the phosphor radiates visible light.

Heretofore, in order to obtain white light, three primary color phosphors are, for example, employed as phosphors to be formed on the inner surface of the bulb. Red is formed of $Y_2O_3$:Eu, green is formed of $(La,Ce,Tb)_2O_3$, $0.2SiO_2$, $0.9P_2O_5$, and blue is formed of $(Ba, Mg)0.8A\ell_2O_3$:Eu. It should be noted that blue color of light refers to radiations exhibiting blue emission substantially located in the wavelength range of from 430 nm to 485 nm. Similarly, green color of light is in the wavelength range of from 515 nm to 570 nm, and red color of light is in the wavelength range of from 588 nm to 630 nm.

In general, since luminence efficiency is important in ordinary illumination fluorescent lamps, discharge by mercury is utilized, and the three primary color phosphors made of the above-mentioned materials are used in combination. In this case, since the ultraviolet rays of the mercury discharge are 254 nm, its efficiency is enhanced by using $3(Ba, Mg)0.8A\ell_2O_3$:Eu as a phosphor emitting blue color of light (hereinafter referred to as a blue phosphor). Also, a phosphor emitting green or red color of light is referred to as a green phosphor or a red phosphor. In this instance, since the ultraviolet rays are 254 nm, the deterioration of the $3(Ba, Mg)0.8A\ell_2O_3$:Eu which is employed as the blue phosphor will not effect its practical usage.

On the other hand, in the case of discharge by xenon gas, radiated ultraviolet rays have a wavelength of approx. 147 nm, much shorter than in the case of mercury. In this instance, it has been found that the blue phosphor made of the $3(Ba, Mg)0.8A\ell_2O_3$:Eu very quickly deteriorates.

Therefore, if a three wavelength fluorescent lamp is, for example, employed, it has the disadvantage that its chromaticity varies greatly over a short period of time.

Such disadvantages are similarly generated not only in the case of a structure having an outer electrode similar to the above-mentioned needle, but even in a lamp having a pair of electrodes in a bulb already practically used to read out an image.

Accordingly, it is an object of the present invention to provide a fluorescent lamp which prevents the deterioration of blue phosphor and eliminates variations in its chromaticity.

In order to achieve the above-mentioned object, there is provided according to the present invention a fluorescent lamp comprising:

an envelope;

at least a pair of electrodes disposed in the envelope to generate a discharge therebetween;

a filling containing xenon, emitting U.V. radiation by means of the discharge;

a phosphor coating on the inner surface of the envelope, including at least one of phosphors of $CaWO_4$ and $Sr_2P_2O_7$:Sn to be excited by the U.V. radiation and to emit visible light.

This invention can be more fully understood from the following detailed description when taken in conjunction with the accompanying drawings, in which:

Fig. 1 is an exploded perspective view of a cold cathode fluorescent lamp and lamp holder according to a first embodiment of the present invention;

Fig. 2 is a plan view of Fig. 1;

Fig. 3 is a sectional view taken along the line III-III of Fig. 2;

Fig. 4 is a sectional view taken along the line IV-IV of Fig. 2;

Fig. 5 is a spectral distribution characteristic diagram;

Fig. 6 is a characteristic diagram showing the transition of chromaticity in the first and second embodiments;

Fig. 7 is an exploded perspective view of a cold cathode fluorescent lamp and lamp holder according to a second embodiment of the present invention;

Fig. 8 is a plan view of the cold cathode fluorescent lamp shown in Fig. 7;

Fig. 9 is a side view of the cold cathode fluorescent lamp shown in Fig. 7;

Fig. 10 is a bottom view of the cold cathode fluorescent lamp shown in Fig. 7;

Fig. 11 is a view of the outer electrode of the cold cathode fluorescent lamp shown in Fig. 7;

Fig. 12 is a sectional view taken along the line VI-VI of Fig. 7;

Fig. 13 is a characteristic diagram showing luminance distribution;

Fig. 14 is a sectional view showing one end of a cold cathode fluorescent lamp according to a third embodiment of the present invention;

Fig. 15 is a characteristic diagram showing luminance maintainability; and

Figs. 16, 17, 18 and 19 are views showing modified embodiments of a cold cathode fluorescent lamp.

The present invention will now be described with respect to a first embodiment in which the present invention is applied to a xenon cold cathode fluorescent lamp used as the display needle of an instrument and $CaWO_4$ is employed as a blue phosphor with reference to the accompanying drawings.

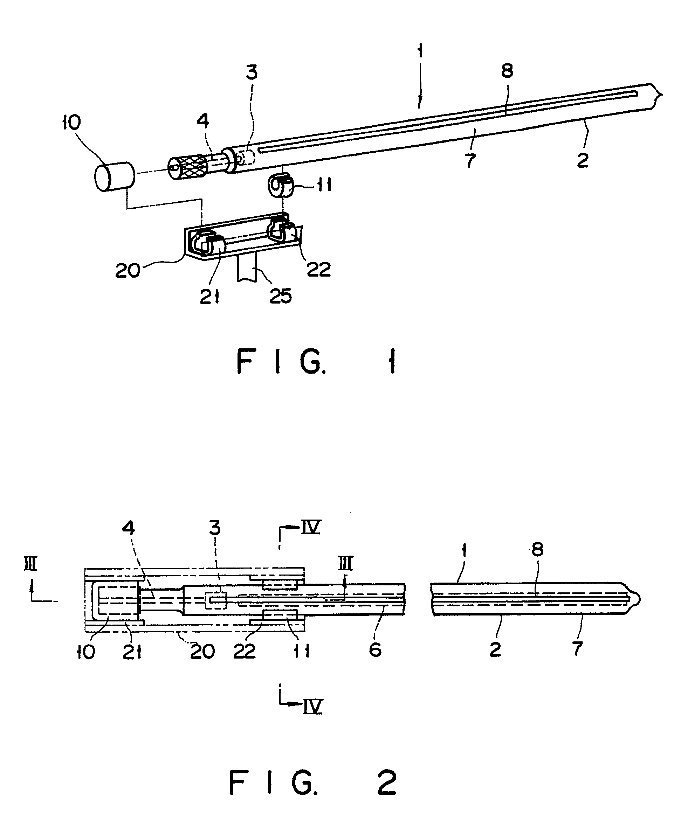

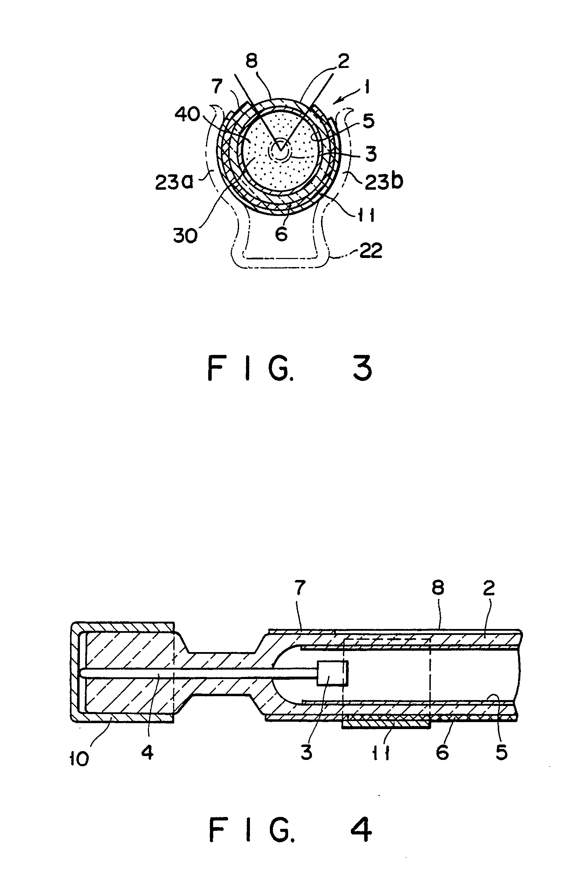

In Fig. 1, a xenon cold cathode fluorescent lamp 1 used as a display needle comprises a hollow rod-shaped glass bulb 2 formed with a slender discharge space 30 (shown in Fig. 3) therein. The glass bulb 2 has, for example, an outer diameter of 2.5 mm, a total length of approx. 60 mm, and is formed in a needle shape.

An inner electrode (cold cathode) 3 is sealed in one end portion of the bulb 2, and the cold cathode 3 is connected to a lead wire 4 hermetically passed through the sealing end of the bulb 2.

As shown in Figs. 3 and 4, a phosphor film 5 is formed on the inner surface around the discharge space 30 of the bulb 3.

The phosphor film 5 of this embodiment is formed of three primary color phosphors. $Y_2O_3$:Eu is employed similarly to the prior art as a red phosphor, and (La, Ce, Tb)$_2O_3$, $0.2SiO_2$, $0.9P_2O_5$ is employed similarly to the prior art as a green phosphor. $CaWO_4$ is employed as a blue phosphor.

These phosphors of the three wavelengths are suitably adjusted and mixed.

Xenon gas 40 (Fig. 3) is sealed at between 5 - 90 Torr, or preferably approx. 50 Torr, in the bulb 2.

An outer electrode 6 having a strip shape is provided, as shown in Fig. 2, along the axial direction of the bulb 2 on the outer surface thereof. The outer electrode 6 is composed by coating, in a strip shape, the corresponding portion of the bulb 2 in a predetermined length from the end portion of the bulb 2 with paste such as carbon phenol or silver epoxy, baking it, and forming it in a film shape.

A first receptacle terminal 10 is attached to the outer surface of the sealed end portion of the inner electrode 3 of the bulb 2. The first receptacle terminal 10 is formed, in a cap shape, of a conductive metal plate made of phosphorus bronze, etc., and covers the end portion of the bulb 2. The first receptacle terminal 10 is pushed into contact with the lead wire 4, hermetically passed through the end portion of the bulb 2, so as to be connected thereto.

The following is a method of attaching the end portion of the inner electrode 3 to the first receptacle terminal 10. A hole can be opened in the first receptacle terminal 10 to be soldered later, or the end portion is coated with paste, covered with the first receptacle terminal 10, and then baked, or the end portion is coated with paste, baked and then covered with the first receptacle terminal 10.

A second receptacle terminal 11 is provided at a position isolated axially with respect to the first receptacle terminal 10 on the outer surface of the bulb 2. The second receptacle terminal 11 is formed by bending a conductive metal piece made of phosphorus bronze in a ring shape around the bulb 2. The second receptacle terminal 11 is attached by elastic force to the bulb 2, and connected to the outer electrode 6, made of paste and formed on the outer surface of the bulb 2.

For attachment of the second receptacle terminal 11, the above methods are used with the exception of soldering.

Further, the second receptacle terminal 11 surrounds the bulb 2 except for the slit portion 8 of the shielding film 7 to be described later.

The shielding film 7 formed on the outer surface of the bulb 2 contains components of carbon, epoxy resin and adhesive. The shielding film 7 is formed to cover the outer electrode 6 on the surface of the bulb 2, and the light transmitting slit portion 8 not covered by the shielding film 7 extends axially along the surface opposed to the surface formed with the outer electrode 6.

More specifically, the outer electrode 6 is formed, as shown in the sectional view of Fig. 3, on one portion of the outer surface of the bulb 2, and the light transmitting slit portion 8 is not covered by the shielding film 7 and is formed on the surface of the fluorescent lamp 1 opposite (180 degrees from) the outer electrode 6. Accordingly, the light in the bulb 2 is externally radiated only through the light transmitting slit portion 8. Thus, the fluorescent lamp 1 is formed as an aperture type.

The shielding film 7 is formed on the entire surface of the bulb 2 except the first and second receptacle terminals 10 and 11, in addition to the light transmitting slit portion 8, and the first and second receptacle terminals 10 and 11 are directly exposed on the outer surface of the lamp 1.

The xenon discharge lamp 1 constructed as described above is attached to a lamp holder 20.

The lamp holder 20 is formed, in a square U-shaped section, of an electrically insulating material, and first and second power supply terminal tongue pieces 21 and 22 are so fixed as to be isolated along the axial direction. These power supply terminal tongue pieces 21 and 22 are formed by bending conductive leaf springs made of phosphorus bronze, etc. in a U shape, to hold the bulb 2 by means of holding pieces 23a and 23b opposed to each other as shown by broken lines in Fig. 3.

The lamp holder 20 is fixed to the display rotational shaft 25 of an instrument. When the rotational shaft 25 is rotated, the lamp holder 20 is correspondingly pivoted.

The rotational shaft 25 of this embodiment is composed of a hollow shaft, not shown. Two coated cords (not shown) are inserted into the hollow display shaft 25, the ends of the coated cords are respectively connected to the first and second power supply terminal tongue pieces 21 and 22, and connected at their other ends to a high frequency power source.

The lamp 1 is attached at the end portion thereof so as to connect the inner electrode 3 to the lamp holder 20. In other words, the first and second receptacle terminals 10 and 11 formed on the outer surface of the bulb 2 in corresponding positions to the first and second power supply terminal tongue pieces 21 and 22 of the lamp holder 20. When the lamp 1 is pushed from the opening side of the lamp holder 20, the holding pieces 23a and 23b of the first and second power supply terminal tongue pieces 21 and 22 respectively hold the portions of the first and second receptacle terminals 10 and 11 so as to mechanically hold the bulb 2. Accordingly, the discharge lamp 1 is fixed to the lamp holder 20.

In this case, since the first and second receptacle terminals 10 and 11 are in electrical contact with the first and second power supply terminal tongue pieces 21 and 22, and subsequently the coated cords, the inner and outer electrodes 3 and 6 are connected to the high frequency power source.

According to the arrangement described above, since the cold cathode discharge lamp 1 is supported at the end portion side for sealing the inner electrode 3 to the lamp holder 20 and held, in this case, by the first and second power supply terminal tongue pieces 21 and 22 disposed at two positions isolated axially from each other, the supporting strength of the lamp is enhanced even if the lamp is supported only at its end portion.

Since high frequency power is supplied to the inner and outer electrodes 3 and 6 through the first and second receptacle terminals 10 and 11, a discharge is generated between the inner and outer electrodes 3 and 6 in the bulb 2.

This discharge excites xenon gas sealed in the discharge space 30 to irradiate an ultraviolet ray having a spectrum peculiar to the xenon gas. This short wavelength ray excites the phosphor film 5, emitting visible light from the phosphor film 5.

The light emitted from the phosphor film 5 is radiated externally from the slit portion 8. Thus, since the slit portion 8 is formed in a slender strip shape in addition to the fact that the bulb 2 is originally slender, the lamp 1 is adapted to indicate the display scale as a display needle.

Since the lamp holder 20 is fixed to the rotational shaft 25 and the lamp holder 20 is, when the rotational shaft 25 is rotated, correspondingly pivoted, the lamp 1 attached to the lamp holder 20 is correspondingly moved through an arc to indicate the display scale.

In the lamp 1 of the embodiment described above, the three primary color phosphors are employed as the phosphor film 5. Accordingly, the lamp 1 irradiates a white light to enhance its luminance.

Since $Y_2O_3$:Eu is employed similarly to the prior art as the red phosphor, $(La, Ce, Tb)_2O_3$, $0.2SiO_2$ and $0.9P_2O_5$ are employed similarly to the prior art as the green phosphor, but $CaWO_4$ is employed as the blue phosphor, so that the deterioration of the blue phosphor is reduced, and variation in the chromaticity is reduced when used over a long period of time.

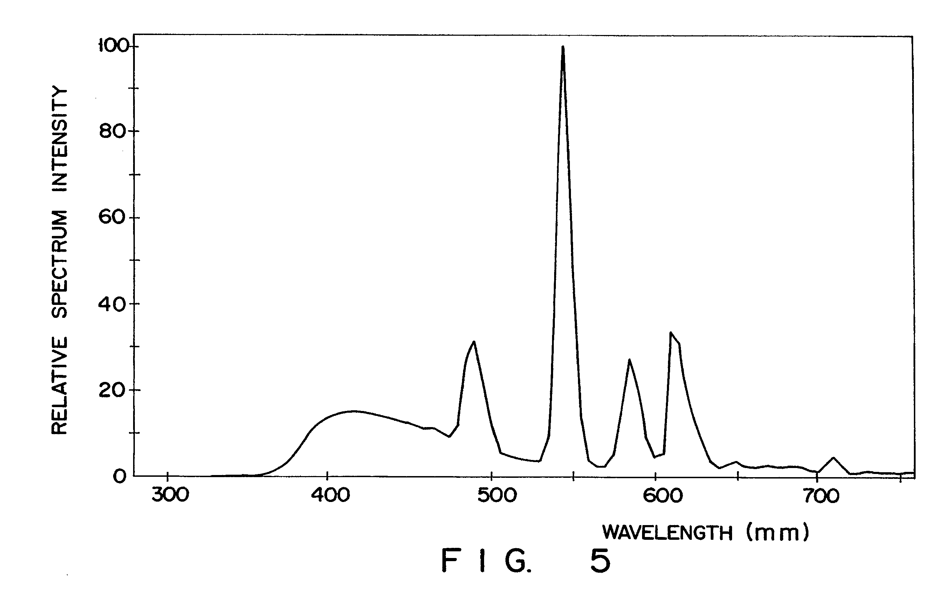

Fig. 5 shows the measured spectral distribution of the xenon discharge lamp 1 formed with the phosphor film 5 of the three primary color phosphors of the embodiment described above. As is apparent from Fig. 5, there are the spectral distributions of the blue, green and red ranges. Accordingly, it is understood that white light is emitted. In this case, the spectral intensity of the green color is slightly high, and thus the luminance of the green color is enhanced, and adapted for a display needle.

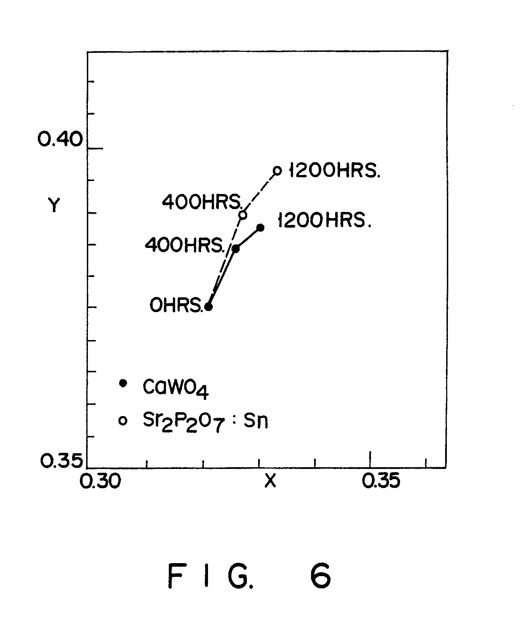

The solid line of Fig. 6 shows a characteristic curve showing the transition of chromaticity when three primary color phosphors are employed, in which $Y_2O_3$:Eu is employed similarly to the prior art as a red phosphor, $(La, Ce, Tb)_2O_3$, $0.2SiO_2$ and $0.9P_2O_5$ are employed similarly to the prior art as a green phosphor, and $CaWO_4$ is employed as a blue phosphor. As is readily understood from Fig. 6, it is understood that the transition of the chromaticity upon lapse of the igniting time is reduced in the present invention.

Therefore, when the $CaWO_4$ is employed as the blue phosphor, deterioration of the phosphor is reduced, and variation in the chromaticity is decreased.

According to the present invention as described above, since the $CaWO_4$ is employed as the blue phosphor, deterioration for the short wavelength light by the discharge of the xenon is reduced, and luminance maintainability is improved.

In the embodiment described above, the first and second receptacle terminals 10 and 11 are formed of metal caps and rings made of phosphorus bronze to cover the bulb 2 in contact with the inner and outer electrodes 3 and 6. Accordingly, when the lamp 1 is attached to or detached from the lamp holder 20, even if the first and second receptacle terminals 10 and 11 interfere with the first and second power supply terminal tongue pieces 21 and 22, they don't put off. Therefore, an electric connection can be positively maintained.

Since the metal caps and rings are readily molded, manufactured without necessity of labor but merely by covering the bulb 2 therewith, its construction is simple.

The conductive portion to be connected with the second receptacle terminal 11 formed of the metal ring is not limited to the outer electrode 6.

For example, the conductive portion may be formed of an element functioning as a proximity conductor or a lead wire in contact with another conductive portion. In other words, other conductive portions can be used as long as they are made of a film formed by baking conductive paste and connected to an external power supply terminal.

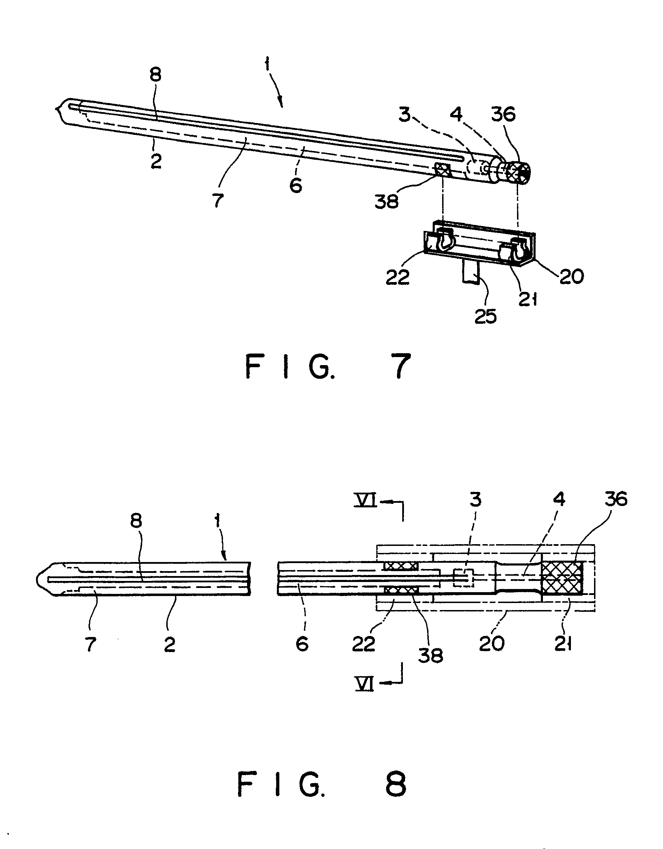

A second embodiment of the present invention which employs $Sr_2P_2O_7$:Sn as a blue phosphor will be described with reference to Figs. 7 to 13, wherein the same reference numerals as those in the first embodiment denote the same or equivalent components to those in the first embodiment.

A phosphor film 5 shown in Fig. 7 is formed similarly to that in the first embodiment, of three primary color phosphors -- $Y_2O_3$:Eu is employed similarly to the prior art as a red phosphor, $(La, Ce, Tb)_2O_3$, $0.2SiO_2$ and $0.9P_2O_5$ are employed similarly to the prior art as a red phosphor, but unlike in the first embodiment, $Sr_2P_2O_7$:Sn is employed as a blue phosphor.

In Fig. 7, an inner electrode (cold cathode) 3 is sealed in the end portion of a bulb 2 to form a recess portion. A first power source connecting portion 36 made of conductive paste such as silver epoxy is formed in a film shape on the surface of the end portion side from the recess portion of the bulb 2. The first power source connecting portion 36 is connected to the cold cathode 3 through a lead wire 4.

As described with respect to the first embodiment, an outer electrode 6 is formed on the outer surface of the bulb 2. The outer electrode 6 has a wide portion $W_1$ at the end side of the bulb 2 as shown in Fig. 11, and also has a relatively wide portion $W_2$ at the base end side near the recess portion, and has a relatively narrow and long portion $W_3$ between the end wide portion $W_2$ and the base end wide portion $W_2$.

It is because the luminance at these positions is raised to form the wide portions $W_1$ and $W_2$ at the end and base end sides of the bulb 2.

A second power source connecting portion 38 connected to the outer electrode 6 is formed in the bulb 2.

The second power source connecting portion 38 corresponds to the present invention. As shown by the broken line in Fig. 11, the second power source connecting portion 38 is isolated axially with respect to the first power source connecting portion 36, but formed at a position near the base end side of the outer electrode 6. The second power source connecting portion 38 is also formed of conductive paste such as silver epoxy, and has a greater width $W_4$ than the base end wide portion $W_2$ of the outer electrode 6, extending circumferentially.

The second power source connecting portion 38 is electrically insulated at the wide portion $W_4$,

represented by the one-dotted broken line in Fig. 11, from the outer surface of the bulb 2 by means of a shielding film 7 in this embodiment.

More specifically, the shielding film 7 is formed on the outer surface of the bulb 2. The shielding film 7 has as dyes components of carbon, epoxy resin and adhesive having electrically insulating performance. The film 7 is formed on the surface provided with the outer electrode 6 of the bulb 2 so as to cover the entire outer electrode 6.

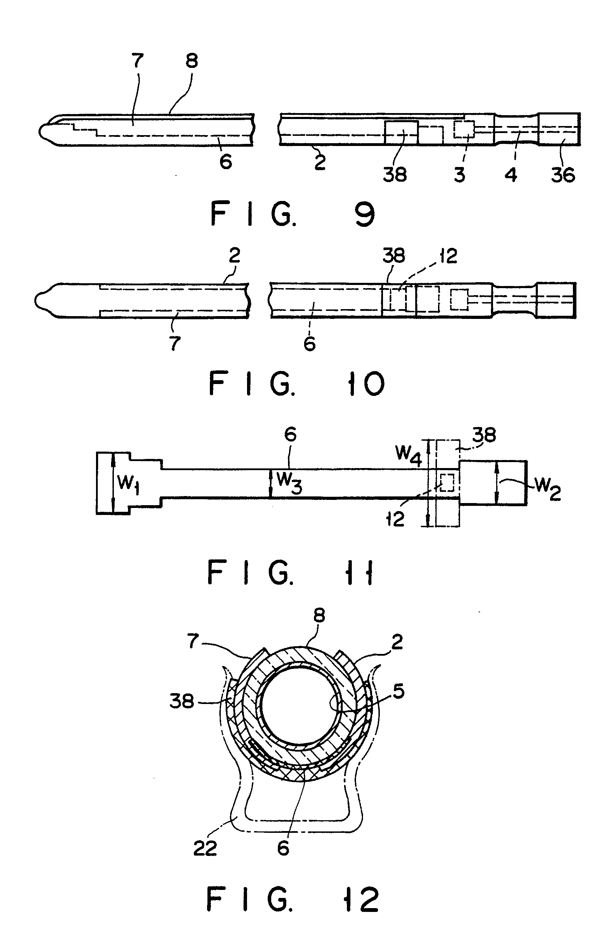

An opening 12 (Figs. 10 and 11), which is opposite to the second power source connecting portion 38, is formed in the shielding film 7 and part of the outer electrode 6 is exposed through the opening 12.

The second power source connecting portion 38 shown by the broken line in Fig. 11 is formed with the width $W_4$ on the outer surface of the shielding film 7.

More specifically, the outer electrode 6 made of paste such as carbon phenol or silver epoxy, etc., is formed on the outer surface of the bulb 2, the shielding film 7, made of carbon, epoxy resin, etc. for shielding light and electrically insulating, is formed on the outer surface, and the second power source connecting portion 38, made of paste such as carbon phenol or silver epoxy, etc., is formed additionally to insulate the second power source connecting portion 38 from the outer surface of the bulb 2 by the shielding film 7, but to electrically connect it to the outer electrode 6 exposed through the opening 12. In the embodiment described above, power supply terminals 21 and 22 are respectively connected to the first and second power source connecting portions 36 and 38.

In the embodiment described above, when the end portion of the cold cathode discharge lamp 1 is pushed into the lamp holder 20, the first and second power source connecting portions 36 and 38 formed on the outer surface of the bulb 2 are held by the first and second power supply terminals 21 and 22 of the lamp holder 20, and hence the lamp 1 is mechanically supported by the lamp holder 20 and electrically connected thereto.

With the arrangement described above, when high frequency power is supplied between the inner cold cathode 3 and the outer electrode 6, a glow discharge is generated in the bulb 2. When this high frequency glow discharge is generated, its luminance is varied according to the width of the outer electrode 6.

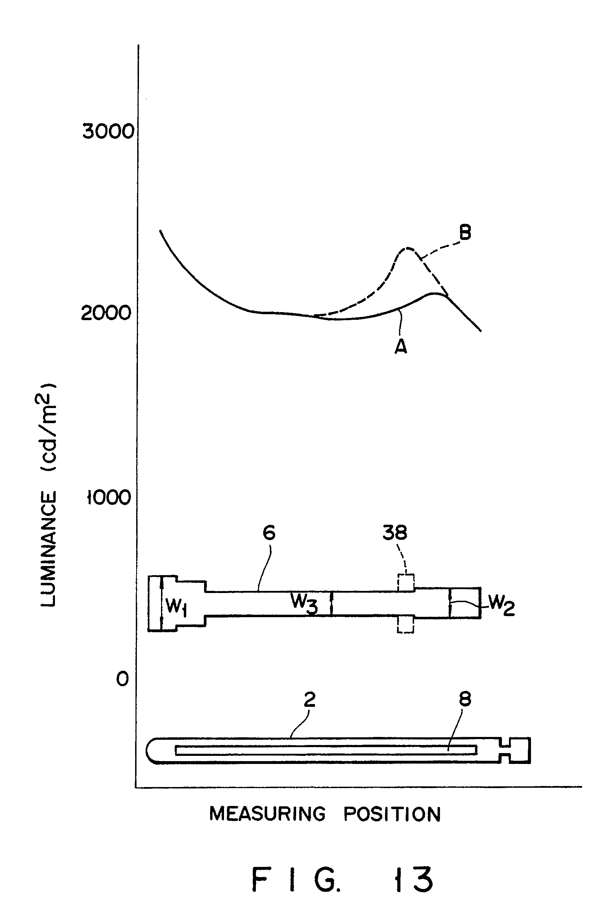

Fig. 13 shows the relationship between the width of the outer electrode 6 and and the luminance, wherein a characteristic shown by a solid line A represents this embodiment, and a broken line B represents prior art.

In the case of the prior art, since the second power source connecting portion 38 is formed to directly coat the outer surface of the bulb 2 continuously to the outer electrode 6 and the second power source connecting portion 38 is exposed from the shielding film 7, the second power source connecting portion 38 substantially broadens the width of the outer electrode 6, and hence the luminance is enhanced as shown by the broken line B at the position corresponding to the wide second power source connecting portion 38. Such a luminance distribution is not preferable as a needle.

On the contrary, in the case of this embodiment, since the wide second power source connecting portion 38 is formed on the outer surface of the shielding film 7 having an insulating action, i.e., since an insulating layer is formed between the second power source connecting portion 38 and the outer surface of the bulb 2, the wide second power source connecting portion 38 does not act as the outer electrode, and hence since this position is in contact with the outer surface of the bulb 2 in narrow width $W_3$ of the outer electrode 6, its luminance can be reduced as shown by the solid line A at this position.

Therefore, the entire luminance distribution is improved.

Since the second power source connecting portion 38 can obtain a large width, its area is large, and as understood by the contacting state shown in Fig. 12, the contact area with the second power supply terminal 22 can be large, thus stabilizing its electric insulation.

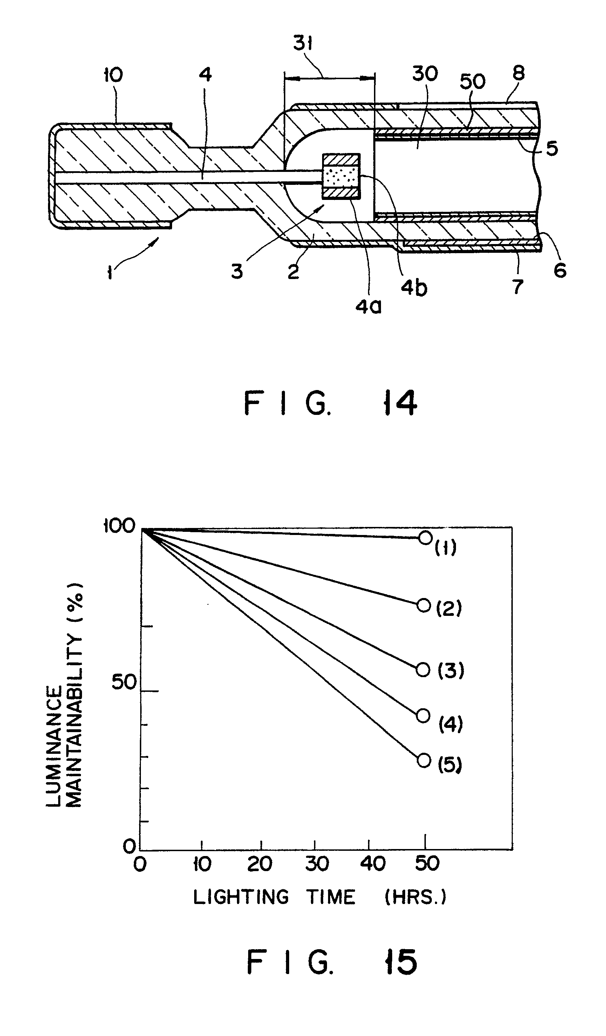

The dotted line of Fig. 14 is a characteristic curve showing the transition of the chromaticity in the case where three primary color phosphors, $Y_2O_3$:Eu being employed similarly to the prior art as a red phosphor, (La, Ce, Tb)$_2O_3$, $0.2SiO_2$ and $0.9P_2O_5$ being employed similarly to the prior art as a green phosphor, and $Sr_2P_2O_7$:Sn being employed as a blue phosphor, are used. As can be readily understood from this diagram, the transition of the chromaticity upon lapse of the igniting time is reduced.

Accordingly, since the $Sr_2P_2O_7$:Sn is employed as the blue phosphor, deterioration of the phosphor is reduced, and hence variation in the chromaticity is reduced.

The electrically insulating film between the power source connecting portion 38 and the bulb 2 may have other functions other than a light shielding action.

Referring to Fig. 14, a third embodiment, in which a mixture of $CaWO_4$ and $Sr_2P_2O_7$:Sn is employed as a blue phosphor, $TiO_2$ fine particles are mixed by 4 % as a UV absorber for preventing deterioration, and $Al_2O_3$ fine particles are mixed by 4 % as a UV reflection agent, will be described, wherein the same reference numerals as those in the first embodiment denote the same or equivalent components.

A phosphor film 5 shown in Fig. 14 is made of three primary color phosphors similarly to those in the first and second embodiments, $Y_2O_3$:Eu is employed similarly to the prior art as a red phosphor, (La, Ce, Tb)$_2$O$_3$, 0.2SiO$_2$ and 0.9P$_2$O$_7$ are employed similarly to the prior art as a green phosphor, but CaWO$_4$ and Sr$_2$P$_2$O$_7$:Sn are employed as a blue phosphor. A protective layer 50 having a protective substance including one of $TiO_2$ and $A\ell_2O_3$ can be formed between the phosphor coating 5 and the inner surface of the envelope 2 so as to protect the envelope 2 from a decrease in light transmissibility.

In the embodiment described above, a cold cathode 3 is sealed in one end of a bulb 2. The cold cathode 3 is composed by bonding a lead wire 4 made of a dumet wire hermetically passed through the sealing end of the bulb 2 to a cylindrical electrode head 4a made of nickel or the like. The electrode head 4a is filled with an electron emitting substance 4b, represented by the rare earth element lanthanide, such as lanthanum boride, etc.

In the bulb 2, the phosphor film 5 is formed on the inner surface opposed to a discharge space 30. In this case, the phosphor film 5 is heretofore formed on the entire inner surface of the bulb 2, but in this embodiment, a non-phosphor-coating region 31 is formed near the cold cathode 3.

The non-phosphor-coating region 31 is formed at the end portion, for sealing the cold electrode 3 of the bulb 2 over a slightly longer region than the height of the electrode head 4a of the cold cathode 3, and formed by a method having a step of not coating initially with phosphor, or removing a phosphor film coated once.

As described above, a shielding film 7 is formed on the whole surface of the bulb 2 except first and second receptacle terminals 10 and 11 in addition to a light transmitting slit portion 8, and the first and second receptacle terminals 10 and 11 are exposed on the outer surface of the lamp 1, but the non-phosphor-coating region 31 is covered with the shielding film 7.

In the lamp 1 described above, as the igniting time is increased, an electron emitting substance such as nickel or rare earth element lanthanide, etc. for composing the cold cathode 3 is scattered, and the scattered substance adheres to the inner surface of the bulb 2.

The adherence of the electrode substance is generated near the cold cathode 3. In the embodiment described above, since the non-phosphor-coating region 31 is formed in the vicinity of the cold electrode 3, i.e., the end portion for sealing the cold electrode 3 of the bulb 2 over the region slightly longer than the height of the electrode head 4a of the cold electrode 3, the scattered electrode substance is adhered directly to the inner surface of the bulb 2 to be deposited on the glass.

Since the adherence of the electrode substance introduces darkening of the bulb 2 but is directly adhered to the glass around the cold electrode 3, there is no anxiety about the phosphor film 5 peeling off in that area.

When its igniting time is increased, the deposited amount of the electrode substance is increased, but since it is adhered directly to the glass surrounding the cold electrode 3, the adhered electrode substance does not readily peel away from the glass.

More specifically, if the electrode substance were to adher to the surface of the phosphor film 5 and gradually be deposited, part of the phosphor film 5 would peel off, and the phosphor film and electrode substance would detach from the inner surface of the bulb 2 together.

Particularly in the lamp using the cold cathode 3 described above, since the diameter of the bulb is small, its surface area is small, and the frictional force of the phosphor film 5 coating the inner surface with the wall of the bulb 2 is reduced, hence its binding force is decreased. Thus, the phosphor is relatively easily peeled. Further, since the distance between the cold cathode 3 and the wall of the bulb 2 is near, the phosphor film is readily peeled by the collision impact of the scattered electrode substance.

On the other hand, if the phosphor film 5 is not formed on the inner surface of the bulb 2 near cold cathode 3, the scattered electrode substance adheres directly to the inner surface of the bulb 2, and accordingly the phosphor is not peeled away therefrom.

Therefore, the electrode composing metal and the phosphor dropped by peeling are vibrated, and hence are not moved along the inner surface of the bulb 2, so that the disadvantage of aiding the peeling of the phosphor film by the friction of the dropped substances with the phosphor film is prevented.

Since the adherence of the phosphor peeled from the inner surface of the bulb to the surface of the cold cathode 3 is also prevented and the phosphor does not coat the surface of the electrode head 4a, a large surface area is obtained for increasing emitting electron amount. Accordingly, the current value during igniting is enhanced. As a result, the brightness of the lamp can be reliably maintained.

Since the phosphor film does not exist on the non-phosphor-coating region 31, there is the problem that the cold cathode 3 is transparently observed from the exterior, but in the embodiment described above, since the shielding film 7 is formed on the outer surface of the bulb 2, the transparent portion of the cold cathode 3 is concealed by the shielding film 7 in consideration of external appearance.

In the embodiment described above, since the mixture of $CaWO_4$ and $Sr_2P_2O_7$:Sn is employed as the blue phosphor, deterioration of the phosphor due to discharge of xenon is reduced, and the bulb luminance maintainability is improved.

The use of $CaWO_4$ and $Sr_2P_2O_7$:Sn has been described as the blue phosphor as mentioned above. Fig. 15 experimentally proves this improvement. In the experimental results of the luminance maintainability of various blue phosphors in Fig. 15, Sample (1) employs $CaWO_4$ as the blue phosphor, Sample (2) employs $Sr_2P_2O_7$:Sn as the blue phosphor, Sample (3) employs $Sr_2P_2O_7$:Eu as the blue phosphor, Sample (4) employs $3Sr_3(PO_4)_2CaC\ell2$:Eu as the blue phosphor, and Sample (5) employs $3(Ba, Mg)0.8A\ell_2O_3$:Eu as the blue phosphor. In these cases, the fine particles of $TiO_2$ and $A\ell_2O_3$ as a UV absorber and a reflection agent are not mixed.

From Fig. 15, the samples which can maintain 75% or more luminance maintainability after 50 hours include the cases of the sample (1) in which $CaWO_4$ is employed and the sample (2) in which $Sr_2P_2O_7$:Eu is employed.

From the above facts, the blue phosphors to be applied in the present invention are understood to be $CaWO_4$ or $Sr_2P_2O_7$:Eu. Among them, the $CaWO_4$ has excellent luminance maintainability.

As described above, in the first embodiment $CaWO_4$ is employed as the blue phosphor, in the second embodiment, $Sr_2P_2O_7$:Sn is employed, and in the third embodiment, a mixture of the two is employed. However, the present invention is not limited to the combination. For example, the $Sr_2P_2O_7$:Sn may be employed in the first embodiment, and the $CaWO_4$ may be employed in the second embodiment.

The phosphors are not limited to the three primary color phosphor mixture as a 3 wavelength fluorescent lamp. For example, the mixture of blue phosphor with continuously emitting phosphor such as calcium halophosphate phosphor, etc., or only a blue phosphor may be employed. In summary, in the discharge of the xenon by using the blue phosphor, the $CaWO_4$ or/and the $Sr_2P_2O_7$:Sn may be employed.

The fluorescent lamp of the present invention is not limited to the use as a display needle of an instrument. For example, the fluorescent lamp of the present invention may be used for the backlight of a liquid crystal display device, an for image reading in a copying machine, etc.

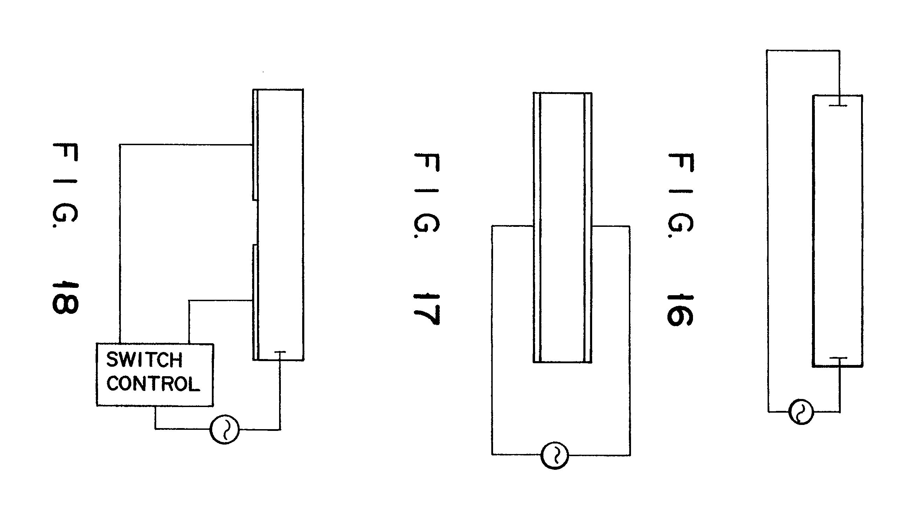

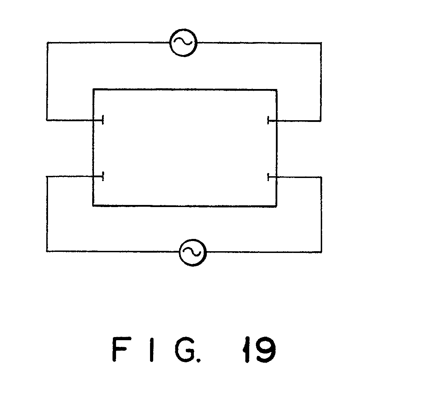

As shown in Fig. 16, the inner electrodes may be provided at both ends of the bulb. As shown in Fig. 17, both electrodes may be disposed on the outside of the bulb. As shown in Fig. 18, two outer electrodes may be switched by a switching control circuit. Two or more discharges may be generated by using a fluorescent lamp as shown in Fig. 19.

The electrode is not limited to the cold cathode type, but may also be a hot-cathode type, and at least one of xenon, krypton, neon, argon, etc. or mercury may be sealed therein.

The bulb is not limited to a linear shape, but may also be a curved shape.

The outer electrode 6 is not limited to the strip shape formed of paste such as carbon phenol or silver epoxy along the tubular axial direction. For example, a conductive wire may be spirally wound on the outer surface of the bulb as an outer electrode.

## Claims

1. A fluorescent lamp characterized by comprising:

   an envelope (2);

   at least a pair of electrodes (3) disposed in said envelope (2) to generate a discharge therebetween;

   a filling (40) containing xenon, emitting U.V. radiation by means of said discharge;

   a phosphor coating (5) on the inner surface of said envelope (2), including at least one of phosphors of $CaWO_4$ and $Sr_2P_2O_7$:Sn to be excited by said U.V. radiation and to emit visible light.

2. A fluorescent lamp according to claim 1, characterized in that said phosphor of $CaWO_4$ emits blue color of light.

3. A fluorescent lamp according to claim 1, characterized in that said phosphor of $Sr_2P_2O_7$:Sn emits blue color of light.

4. A fluorescent lamp according to claim 2 or 3, characterized in that said phosphor coating (5) further comprises a second phosphor emitting green color of light and a third phosphor emitting red color of light, in order to emit white light therefrom.

5. A fluorescent lamp according to claim 1, characterized in that said phosphor coating (5) further comprises a protective substance for protecting said phosphor from a decrease in efficiency of said phosphor.

6. A fluorescent lamp according to claim 5, characterized in that said protective substance is

one of TiO$_2$ and A$\ell_2$O$_3$.

7. A fluorescent lamp according to claim 1, characterized further comprising a protective layer (50) having a protective substance coated between said phosphor coating (5) and said inner surface of said envelope (2) for protecting said envelope (2) from a decrease in light transmissibility.

8. A fluorescent lamp according to claim 7, characterized in that said protective substance is one of TiO$_2$ and A$\ell_2$O$_3$.

9. A fluorescent lamp according to claim 1, characterized in that said pair of electrodes (3) are formed within said envelope (2).

10. A fluorescent lamp according to claim 1, characterized in that said pair of electrodes (3) are formed on the outside of said envelope (2).

11. A fluorescent lamp according to claim 1, characterized in that one of said electrodes (3) is formed on the exterior of said envelope (2) and the other of said electrodes (3) is formed within said envelope (2).

12. A fluorescent lamp according to claim 1, characterized in that said envelope (2) is a rod-shaped glass tube.

13. A fluorescent lamp according to claim 12, characterized in that said one of said electrodes (3) is an outer electrode formed on an outer surface of said envelope (2), and the other of said electrodes (3) is an inner electrode formed within said envelope (2).

14. A fluorescent lamp according to claim 13, characterized in that said inner electrode is sealed in one end portion of said envelope (2), and said outer electrode has a strip shape formed along an axial direction of said envelope (2).

15. A fluorescent lamp according to claim 14, characterized in that said phosphor coating (5) is formed over the entire inner surface of said envelope (2) other than the surface near said inner electrode.

16. A fluorescent lamp according to claim 14, characterized by further comprising a first receptacle terminal (10) provided on said outer surface of said end portion of said envelope (2) and connected with said inner electrode, and a second receptacle terminal (11) provided on said outer surface, axially isolated from said first receptacle terminal (10) and connected with said outer electrode.

17. A fluorescent lamp according to claim 16, characterized by further comprising a shielding film (7) formed on said surface of said envelope (2) so as to form a slit for light transmitting.

18. A fluorescent lamp according to claim 17, characterized in that said shielding film (7) formed except a boundary of said first receptacle terminal (10).

19. A fluorescent lamp according to claim 16, characterized by further comprising a shielding film (7) formed on said surface of said envelope (2) except said first receptacle terminal (10) and an area of a slit for light transmitting, said second receptacle terminal (11) is formed on said shielding film (7).

20. A fluorescent lamp according to claim 19, characterized in that said second receptacle terminal (11) is wider than said outer electrode.

F I G.  1

F I G.  2

F I G. 3

F I G. 4

F I G. 5

EP 0 433 916 A1

F I G. 6

F I G. 7

F I G. 8

F I G. 9

F I G. 10

F I G. 11

F I G. 12

FIG. 13

F I G. 14

F I G. 15

F I G. 16

F I G. 17

SWITCH
CONTROL

F I G. 18

F I G. 19

| DOCUMENTS CONSIDERED TO BE RELEVANT | | | EP 90124259.4 |
|---|---|---|---|
| **Category** | **Citation of document with indication, where appropriate, of relevant passages** | **Relevant to claim** | **CLASSIFICATION OF THE APPLICATION (Int. Cl.5)** |
| Y | PATENT ABSTRACTS OF JAPAN, unexamined applications, E field, vol. 6, no. 32, February 26, 1982 THE PATENT OFFICE JAPANESE GOVERNMENT page 60 E 96 * Kokai-No. 56-152 152 (MATSUSHITA DENKO) * | 1 | H 01 J 61/44 H 01 J 1/70 C 09 K 11/68 C 09 K 11/71 |
| A | -- | 3,4 | |
| Y | US - A - 4 559 480 (NOBS) * Fig. 3; column 4, lines 11- 14 * | 1 | |
| A | -- | 2 | |
| P,X | DE - A1 - 3 916 997 (KANO) * Claim 10 * | 1 | |
| | -- | | **TECHNICAL FIELDS SEARCHED (Int. Cl.5)** |
| A | PATENT ABSTRACTS OF JAPAN, unexamined applications, E field, vol. 11, no. 346, November 12, 1987 THE PATENT OFFICE JAPANESE GOVERNMENT page 62 E 556 * Koakai-No. 62-126 542 (TOSHIBA) * | 5-8 | H 01 J 61/00 H 01 J 1/00 C 09 K 11/00 |
| A | -- US - A - 4 797 594 (SIGAI) * Column 4, line 41 - column 5, line 2; claims 1-4 * | 5,6 | |
| A | -- US - A - 3 995 192 (HAMMER) ---- | | |

The present search report has been drawn up for all claims

| Place of search | Date of completion of the search | Examiner |
|---|---|---|
| VIENNA | 20-02-1991 | BRUNNER |